# EUROPÄISCHE PATENTSCHRIFT

(11) **EP 3 548 399 B1**
(45) Veröffentlichungstag und Bekanntmachung des Hinweises auf die Patenterteilung: **14.08.2024**
(21) Anmeldenummer: 18833599.6
(22) Anmeldetag: 06.12.2018
(51) Int. Cl.: B65D 83/08

(54) **REINIGUNGSTUCH/ -PAD**
CLEANING CLOTH CLEANING PAD
CHIFFON DE NETTOYAGE TAMPON DE NETTOYAGE

(30) Priorität: 21.12.2017 DE 202017107847 U
(43) Veröffentlichungstag der Anmeldung: 09.10.2019
(73) Patentinhaber: Pohlmann, Ulrich, 48683 Ahaus (DE)
(72) Erfinder: Pohlmann, Ulrich, 48683 Ahaus (DE)
(74) Vertreter: Bischof, Oliver
(86) Internationale Anmeldenummer: PCT/DE2018/100996
(87) Internationale Veröffentlichungsnummer: WO 2019/120375

(56) Entgegenhaltungen:
- EP-A1- 3 167 787
- WO-A1-2007/053179
- DE-A1- 19 710 032
- DE-U1- 202017 107 166

## Beschreibung

Die vorliegende Erfindung betrifft ein Reinigungstuch oder -pad mit
- wenigstens einer Reinigungsschicht mit wenigstens einer Reinigungsfläche,
- wenigstens einer Kontaktschicht mit wenigstens einer Kontaktfläche
   und
- wenigstens einer Verstärkungsschicht in Form einer Trägerschicht, die zumindest abschnittsweise zwischen der Reinigungsschicht und der Kontaktschicht angeordnet ist.

Zudem betrifft die vorliegende Erfindung ein System, umfassend das erfindungsgemäße Reinigungstuch oder -pad und einen Reinigungstuchbehälter mit einem Grundkörper, der zumindest abschnittsweise als Hohlprofil mit einer Längsachse mit mindestens drei aneinander angrenzenden, das Profil bildenden Seitenwänden und mit zumindest einer Stirnwand ausgebildet ist, wobei die Außenkontur des Reinigungstuchs oder -pads der Innenkontur des Grundkörpers derart angepasst ist, dass das Reinigungstuch in den Grundkörper einschiebbar oder aus dem Grundkörper herausschiebbar ist und zumindest abschnittsweise durch die Seitenwände umschlossen werden kann.

Ein Reinigungstuch der eingangs bekannten Art offenbart die DE 197 10 032 A1, wobei bei diesem bekannten Reinigungstuch ausschließlich Reinigungsflächen Strukturierungen aufweisen.

Ein gattungsbildendes Reinigungstuch oder -pad ist beispielsweise auch aus dem deutschen Gebrauchsmuster DE 20 2012 102 128 U1 des Anmelders der vorliegenden Erfindung bekannt. Die DE 20 2012 102 128 U1 offenbart ein flächenhaftes, flexibles Reinigungs-Pad in Sandwich-Anordnung für glatte oder leicht strukturierte, feste Oberflächen mit wenigstens einer Trägerschicht, wenigstens einer textilen Reinigungsschicht und wenigstens einem dazwischen angeordneten Folienabschnitt von erhöhter mechanischer Stabilität. Im Gegensatz zu dem Reinigungstuch oder -pad der vorliegenden Erfindung weist die Trägerschicht des bekannten Reinigungs-Pads auf ihrer der Reinigungsschicht gegenüber liegenden Seite ein selbstklebendes oder adhäsives Mittel von einer geringen Haftklebeeigenschaft auf, welches es erlaubt, das an eine feste Oberfläche angedrückte Reinigungs-Pad von der Oberfläche durch Abziehen wieder zu lösen.

Aus der DE 20 2017 107 166 U1 geht ein Reinigungstuchbehälter zur Aufnahme mindestens eines Reinigungstuches oder -pads hervor, wobei das Reinigungstuch oder-Pad keine Kontaktfläche aufweist.

Die WO 2007/053179 A1 sowie die EP 3 167 787 A1 offenbaren Reinigungstücher mit Strukturierungen, die auch mit einer Reinigungsfunktion verbunden sind, sodass sich diese Strukturierungen auf der Reinigungsfläche befinden.

Die Aufgabe der vorliegenden Erfindung ist es, ein Reinigungstuch oder -pad bereitzustellen, welches eine verbesserte Handhabbarkeit bietet und welches gegen ein unbeabsichtigtes Herausfallen aus einer das erfindungsgemäße Reinigungstuch oder -pad umschließenden Box oder Schachtel gesichert ist. Zudem ist es die Aufgabe, einen Behälter zur Aufnahme des erfindungsgemäßen Reinigungstuchs oder -pads zur Verfügung zu stellen, der derart ausgestaltet ist, dass zum einen das in dem Behälter aufgenommene Reinigungstuch oder -pad vor einem Herausfallen gesichert ist und zum anderen eine Entnahme des erfindungsgemäßen Reinigungstuchs oder - pads aus dem Behälter vereinfacht ist.

Zur Lösung der Aufgabe wird ein Reinigungstuch oder -pad mit sämtlichen Merkmalen des Anspruchs 1, insbesondere des kennzeichnenden Teils, vorgeschlagen. Vorteilhafte Weiterbildungen des Reinigungstuchs oder -pads sind in den abhängigen Vorrichtungsansprüchen angegeben. Die Aufgabe wird weiterhin gelöst durch ein System umfassend das erfindungsgemäße Reinigungstuch und einen Reinigungstuchbehälter. Dabei gelten Merkmale und Details, die im Zusammenhang mit dem erfindungsgemäßen Reinigungstuch oder -pad beschrieben sind, selbstverständlich auch im Zusammenhang mit dem erfindungsgemäßen System und jeweils umgekehrt, sodass bezüglich der Offenbarung zu den einzelnen Erfindungsaspekten stets wechselseitig Bezug genommen wird, bzw. werden kann.

Das erfindungsgemäße Reinigungstuch oder -pad mit
- wenigstens einer Reinigungsschicht mit wenigstens einer Reinigungsfläche,
- wenigstens einer Kontaktschicht mit wenigstens einer Kontaktfläche
   und
- wenigstens einer Verstärkungsschicht in Form einer Trägerschicht, die zumindest abschnittsweise zwischen der Reinigungsschicht und der Kontaktschicht angeordnet ist, schließt die technische Lehre ein, dass nur auf der Kontaktfläche der Kontaktschicht zumindest abschnittsweise wenigstens eine Texturierung in Form einer Grip-Fläche ausgebildet ist, wobei die Grip-Fläche gegenüber der Kontaktfläche einen erhöhten Reibungswiderstand aufweist.

Als "Reinigungstuch oder -pad" soll im Sinne der vorliegenden Erfindung ein Reinigungsmittel in Form eines Tuchs, eines Pads oder eines Reinigungsschwamms verstanden, welches im Sinne der vorliegenden Erfindung besonders vorteilhaft eine Kombination aus zumindest zwei der zuvor genannten Reinigungsmittel ist, die beispielsweise in Sandwichbauweise, wobei beidseitig einer als schwammartige Schicht oder einer aus einem mikroporösem Schaum gebildeten Verstärkungsschicht in Form einer Trägerschicht beispielsweise als Reinigungsschicht ein Tuch mit einer Reinigungsfläche, beispielsweise ein Mikrofasertuch, oder beispielhaft ein Ledertuch mit oder ohne Reinigungsfunktion, verbunden ist, und auf der der Reinigungsschicht gegenüberliegenden Seite eine Kontaktschicht mit der Trägerschicht verbunden ist. Für die Verstärkungsschicht in Form der Trägerschicht kann ein offen- oder geschlossenporiger Weichschaum, vorzugsweise Mikroschaum auf Polyurethan-, Polyethylen- oder Silikonbasis vorgesehen sein. Die Verstärkungsschicht in Form der Trägerschicht hat dabei die Funktion zur Stabilisierung des Reinigungstuchs oder -pads, d.h. zur Aufrechterhaltung der Form und Integrität des erfindungsgemäßen Reinigungstuchs oder -pads. Die Aufrechterhaltung der Form und Integrität des erfindungsgemäßen Reinigungstuchs oder -pads beinhaltet dabei insbesondere die Funktion, dass das Reinigungstuch oder -pad, das gefaltet in dem Reinigungstuchbehälter oder der - box aufgenommen ist, nach dem Herausziehen aus dem Reinigungstuchbehälter oder der -box sich aufgrund der materialbedingten Rückstellkraft selbsttätig entfaltet._Die Reinigungsschicht kann aus gewirktem, gestricktem, gewebtem oder nicht gewebtem Textilmaterial bestehen. Vorzugsweise ist die Reinigungsschicht als ein Mikrofaserflächengebilde, beispielsweise aus Polyamid- und/oder Polyester-Mikrofasern ausgebildet. Das Flächengebilde kann auch aus anderen synthetischen Chemiefasern, wie Polyacryl-, Elastan- oder Polychloridfasern bzw. aus zellulosischen Chemiefasern, wie Viskose oder Acetat gefertigt sein. Anstelle des Mikrofaserflächengebildes kann auch synthetisches Leder eingesetzt werden. Zudem kann ein Flächengebilde aus einer Lederschicht ein Reinigungsmittel in Sandwichbauweise komplettieren. Das Reinigungstuch oder -pad ist vorteilhaft monolithisch, d. h. einteilig ausgestaltet. Es können aber auch mindestens zwei Reinigungstücher oder -pads miteinander verbunden werden, wobei die Verbindung zwischen den Reinigungstüchern oder -pads als Falzlinie zum Falten des Reinigungstuchs oder -pads dient. Die Kontaktschicht des erfindungsgemäßen Reinigungstuchs oder -pads weist vorteilhaft eine obere zum Benutzer hin liegende Kontaktfläche auf, die zur Kontaktierung des Reinigungstuchs oder - pads dient. Die Kontaktschicht mit der zum Benutzer hin liegenden Kontaktfläche kann ebenfalls durch ein Flächengebilde aus gewirktem, gestricktem, gewebtem oder nicht gewebtem Textilmaterial gebildet sein. Auch kann ein Mikrofaserflächengebilde, wie es für die Reinigungsschicht beschrieben ist, als Kontaktschicht mit Kontaktfläche ausgebildet sein. Auch andere synthetische Chemiefasern, wie Polyacryl-, Elastan- oder Polychloridfasern bzw. aus zellulosischen Chemiefasern, wie Viskose oder Acetat kommen zur Ausbildung für eine als Flächengebilde ausgestaltete Kontaktschicht mit Kontaktfläche in Frage. Ebenfalls kommt synthetisches Leder oder echtes Leder zur Ausbildung der Kontaktschicht mit Kontaktfläche in Frage.

Es ist denkbar, die Reinigungsschicht mit einem bakterizidem Mittel, wie Silber-, Kupfer- oder Goldionen zu versetzen. Die Metallionen können auf bekannte Weise, z. B. durch Aufsprühen oder Durchtränken auf die Reinigungsschicht, beispielsweise auf die Mikrofaserschicht aufgetragen sein, wie es bei marktgängigen Reinigungstüchern für den Haushalt bereits bekannt ist.

Überdies kann die Reinigungsschicht mit einem Tensid versetzt sein, um eine bessere Reinigungswirkung zu erzielen.

In einer vorteilhaften Ausführungsform eines erfindungsgemäßen Reinigungstuchs oder -pads kann die Verstärkungsschicht monolithisch, d.h. einteilig mit der Reinigungsschicht ausgebildet sein, wobei die der Kontaktfläche gegenüberliegende Fläche der Verstärkungsschicht als Reinigungsfläche ausgebildet ist. Bei dieser Ausführungsform hat die Verstärkungsschicht neben der Funktion zur Stabilisierung des Reinigungstuchs oder -pads zusätzlich die Funktion der Reinigungsschicht mit deren Reinigungsfläche.

Das erfindungsgemäße Reinigungstuch oder -pad kann einen runden, ovalen, polygonalen, vorzugsweise rechteckigen und geringfügig an seinen Ecken abgerundeten Umriss bzw. Form haben, wobei der Umriss bzw. die Form des Reinigungstuchs oder -pads vorteilhaft dem Umriss bzw. der Form des Grundkörpers des erfindungsgemä-ßen Reinigungstuchbehälters angepasst ist. Weiterhin kann das Reinigungstuch oder -pad eine gegenständliche Form, beispielsweise eine herz-, ball- oder trikotförmige Form haben, die geeignet ist, in dem Grundkörper des erfindungsgemäßen Reinigungstuchbehälters aufgenommen zu werden, wobei vorteilhaft der erfindungsgemä-ße Reinigungstuchbehälter der gegenständlichen Form des Reinigungstuchs oder - pads entspricht bzw. an diese und/oder umgekehrt angepasst werden kann.

Im Sinne der vorliegenden Erfindung soll als "Grip-Fläche" eine Formatierung aus Grip-Punkten, -Linien, -Fäden oder anderen Formen oder Materialien mit erhöhtem Reibungswiderstand oder einen erhöhten Reibungswiderstand bietend, verstanden werden, welche in Form einer Erhebung auf der Kontaktfläche, in Form einer Vertiefung in der Kontaktfläche oder ein in die Kontaktfläche eingearbeitetes Material sind, welche eine Texturierung der Kontaktfläche erlaubt. In der vorgenannten Form kann die Grip-Fläche beispielsweise ein einzelner Grip-Punkt sein, der auf die Kontaktfläche aufgesetzt ist, oder der in die Kontaktfläche eingearbeitet ist, wobei der Grip-Punkt gegenüber der Kontaktfläche bei Kontaktierung durch einen Benutzer oder bei Kontaktierung mit der Wandinnenfläche einer Seitenwand eines Grundkörpers eines Reinigungstuchbehälters eine erhöhte Haftreibung aufweist, d. h. die Grip-Fläche einen gegenüber der Kontaktfläche erhöhten Reibungswiderstand aufweist. Insgesamt soll die Grip-Fläche eine verbesserte Haptik und einen verbesserten Komfort gegenüber einem Reinigungstuch ohne Grip-Fläche bieten. Durch die verbesserte Haptik wird der Bedienkomfort des erfindungsgemäßen Reinigungstuchs oder -pads erhöht, da beispielsweise bei der Reinigung eines Körpers, wobei die Reinigungsfläche der Reinigungsschicht die Oberfläche des Körpers kontaktiert, der verbesserte Halt über die Grip-Fläche ein präzises Führen des Reinigungstuchs über die Oberfläche des Körpers erlaubt, bzw. ein Abrutschen von der oder über die Kontaktfläche durch den verbesserten Halt erfindungsgemäß verhindert wird.

Vorteilhaft ist das Reinigungstuch oder -pad zur Aufnahme in einem Reinigungstuchbehälter ausgebildet, wobei bei Aufnahme des Tuchs oder Pads in dem Reinigungstuchbehälter die Kontaktfläche der Kontaktschicht zumindest abschnittsweise wenigstens eine Wandinnenfläche des Reinigungstuchbehälters kontaktiert. Diese Ausgestaltung hat den Vorteil, dass durch die zwischen der Grip-Fläche und der Wandinnenfläche vermittelte erhöhte Reibung erfindungsgemäß ein unbeabsichtigtes Herausfallen des Reinigungstuchs oder -pads aus dem Reinigungstuchbehälter verhindert. Dieser Effekt kann noch verstärkt werden, wenn zusätzlich die Wandinnenfläche des Reinigungstuchbehälters derart ausgestaltet ist, dass diese zumindest abschnittsweise einen erhöhten Reibungswiderstand aufweist.

Als "Reinigungstuchbehälter" wird im Sinne der vorliegenden Anmeldung ein Behälter oder eine Box verstanden, in welchen ein Reinigungsmittel zumindest in Form eines Tuchs, eines Pads oder eines Schwamms aufgenommen werden kann.

Geht man vom grundsätzlichen Aufbau eines Reinigungstuchbehälter aus, wie dieser in der deutschen Patentanmeldung 10 2017 118 135.0 des Anmelders der vorliegenden Erfindung beschrieben ist, ist der Reinigungstuchbehälter zur Aufnahme des erfindungsgemäßen Reinigungstuches oder -pads derart ausgestaltet, dass dieser einen Grundkörper aufweist, der zumindest abschnittsweise als Hohlprofil mit einer Längsachse mit mindestens drei aneinander angrenzenden, das Profil bildenden Seitenwänden und mit zumindest einer Stirnwand ausgebildet ist. Das in den Grundkörper aufgenommene Reinigungstuch oder -pad wird von dem Grundkörper zumindest abschnittsweise durch dessen Seitenwände umschlossen und kann vorteilhaft durch eine als Öffnung ausgestalte Stirnwand aus dem Grundkörper herausgeschoben werden. Zudem ist vorteilhaft in einer der Wände des Grundkörpers eine Aussparung derart ausgebildet, dass das in dem Grundkörper aufgenommene Reinigungstuch oder -pad durch Durchgriff durch die Aussparung kontaktierbar und zumindest abschnittsweise entlang der Aussparung parallel zu der Längsachse über die als Öffnung ausgebildete Stirnwand aus dem Grundkörper heraus geschoben werden kann.

Als "Aussparung" wird ein Fenster in Form eines Materialdurchbruchs oder einer Öffnung in den Wänden verstanden. Die Wände können dabei vollständig durch eine Öffnung ersetzt werden. Die Aussparung ermöglicht dabei zum einen, dass das in dem Grundkörper aufgenommene und von den Wänden umschlossene Reinigungstuch kontaktierbar, d. h. berührt werden kann, und zum anderen in Kontakt, d. h. unter Berührung des Reinigungstuches, dieses zumindest abschnittweise entlang der Aussparung relativ zum Grundkörper verschoben werden kann.

Durch die Ausgestaltung einer Aussparung in zumindest einer der Seitenwände oder in einer der Stirnwände lässt sich das in dem Grundkörper aufgenommene erfindungsgemäße Reinigungstuch erfindungsgemäß unter Kontaktierung zumindest abschnittsweise entlang der Aussparung verschieben. Zur Kontaktierung dient beispielsweise der Daumen einer Hand, deren Handinnenfläche den Reinigungstuchbehälter umschließt. Somit kann das Reinigungstuch aus dem erfindungsgemäßen Reinigungstuchbehälter einhändig zumindest abschnittsweise aus dem Grundkörper heraus geschoben werden, wobei das Reinigungstuch beispielsweise unter Kontaktierung des Reinigungstuches durch Durchgriff mit dem Daumen durch die Aussparung mit Bewegung des Daumens entlang der Aussparung und relativ zu dem Grundkörper verschoben werden kann, um das Reinigungstuch über eine Wand des Grundkörpers mit Öffnung oder über eine Öffnung, die vollflächig eine Wand ersetzt, aus dem Grundkörper herauszuschieben. Im Gegensatz dazu lässt sich das erfindungsgemäße Reinigungstuch oder -pad aus der aus dem Gemeinschaftsgeschmacksmuster 2008409-0001 bekannten Reinigungstuchbox unter Anwendung von Zugkräften aus der Reinigungstuchbox herausziehen, nämlich unter Anwendung des Pinzettengriffes, d. h. unter Kontaktierung des Reinigungstuchs oder -pads zwischen Zeigefinger und Daumen. Die zumindest abschnittweise auf oder in der Kontaktfläche ausgebildete Grip-Fläche dient bei Aufnahme in der Reinigungsbox oder in dem Reinigungstuchbehälter demnach erfindungsgemäß zum einen dazu, um ein unbeabsichtigtes Herausfallen des in der Box oder dem Behälter aufgenommenen Reinigungstuchs oder - pads zu verhindern, da zwischen der Grip-Fläche des erfindungsgemäßen Reinigungstuchs oder -pads und der Wandinnenfläche der Box oder des Behälters ein erhöhter Reibungswiderstand in Form einer Haftreibung besteht, und zum anderen ein Herausziehen oder Herausschieben aus der Box oder dem Behälter durch den erhöhten Reibungswiderstand bei Kontaktierung der Grip-Fläche durch einen Benutzer erleichtert wird.

Besonders vorteilhaft ist die Grip-Fläche zumindest abschnittsweise in einem Abschnitt der Kontaktfläche ausgebildet, welcher bei Aufnahme des Tuchs oder Pads in dem Reinigungstuchbehälter zumindest abschnittsweise deckungsgleich zu der in dem Reinigungstuchbehälter ausgebildeten Aussparung liegt. Die deckungsgleiche Ausbildung der Grip-Fläche zu der Aussparung ermöglicht es einem Benutzer durch die Aussparung hindurch die Grip-Fläche zu kontaktieren, wobei der erhöhte Reibungswiderstand der Grip-Fläche dem Benutzer das Herausziehen oder -schieben aus dem Reinigungstuchbehälter oder der Box erleichtert. Beide Effekte, die durch die Ausbildung der Grip-Fläche erreicht werden können, nämlich das Verhindern des unbeabsichtigten Herausfallens des Reinigungstuchs oder -pads aus dem Behälter oder der Box und die verbesserte Haptik durch die Texturierung der Kontaktfläche, welche ein Herausführen aus dem Behälter oder der Box unterstützt, sind sowohl in Kombination als auch in deren Alleinstellung erfindungswesentlich.

Die Ausgestaltung der Texturierung der Kontaktfläche in Form der erfindungsgemä-ßen Grip-Fläche ist in allen Formen und Mustern denkbar, wobei die Texturierung erhaben, vertieft ausgebildet oder mit in die Kontaktfläche eingearbeitet sein kann. Die Texturierung kann beispielsweise als einzelner Grip-Punkt oder als eine Vielzahl von Grip-Punkten ausgestaltet sein. Auch eine einzelne Linie oder mehrere parallel zueinander liegende oder sich kreuzende Linien sind als Ausgestaltung der Grip-Fläche denkbar. Die Grip-Fläche kann vorteilhaft, den Wünschen eines Kunden angepasst, auch in Form eines Musters, eines Zeichens, eines Symbols, eines Bildes und/oder einer Figur ausgestaltet sein, wobei die dadurch gestaltete Werbebotschaft zusätzlich die vorteilhaften technischen Eigenschaften der Grip-Fläche ergänzt.

Vorteilhaft kann zur Ausbildung der Texturierung in Form der Grip-Fläche Material auf die Kontaktfläche aufgetragen werden, wobei das aufgetragene Material gegenüber dem das die Kontaktfläche bildende Material einen erhöhten Grip aufweist, nämlich einen erhöhten Reibungswiderstand bietet. Bei dem Material kann es sich vorteilhaft um Silikone, Polyurethane, Vulkanisate von Natur- oder Synthesekautschuken oder eine Kombination von diesen Kautschuken oder um einen Schmelzklebstoff oder - kunststoff handeln, der im heißen Zustand in flüssiger Form, beispielsweise in Form von "Dots" auf die Kontaktfläche aufgetragen wird, und der beim Abkühlen in einen festen Aggregatzustand wechselt. Die Texturierung in Form der Grip-Fläche kann auch durch Beflockung der Kontaktfläche auf die Kontaktfläche aufgetragen werden. Dabei werden vorteilhaft Flockfasern mit einer Länge von 0,5 bis 6 mm beispielsweise durch elektrostatische Beflockung in einem elektrischen Feld auf die zuvor mit einem Klebstoff beschichtete Kontaktfläche aufgetragen. Die Auftragung des Klebstoffs erfolgt dabei vorteilhaft in Form einer Klebstoffschicht, beispielsweise durch Siebdruck, eine Spritzpistole oder im Tauchbad. Durch das elektrische Feld werden dabei vorteilhaft alle Fasern gleich, insbesondere senkrecht zur Kontaktfläche ausgerichtet, wodurch die Grip-Fläche in Form einer gleichmäßigen, textilen Oberfläche ausgebildet ist. Durch die senkrecht zu der Kontaktfläche ausgerichteten Fasern erhöht sich dabei vorteilhaft insgesamt die Oberfläche und damit die Griffigkeit der Grip-Fläche. Zudem ist die durch Beflockung ausgebildete Texturierung in Form der Grip-Fläche aufgrund der verwendeten Klebstoffe sehr strapazierfähig und abriebbeständig. Abhängig von der Faserstärke und der Faserlänge kann entsprechend der gewünschten Funktion, Optik oder Haptik, eine samtweiche bis hart-abrasive Oberfläche erstellt werden. Insofern eignet sich die Texturierung in Form der Grip-Fläche, insbesondere wenn diese durch Beflockung der Kontaktfläche auf diese aufgetragen ist, nicht nur für eine verbesserte Handhabbarkeit des Reinigungstuchs oder -pads bzw. als Schutz vor dem unbeabsichtigten Herausfallen aus dem Reinigungstuchbehälter oder der -box, sondern aufgrund der abrasiven Eigenschaften auch zusätzlich zur Entfernung von Verschmutzungen auf Oberflächen.

Die Texturierung in Form der Grip-Fläche kann auch vorteilhaft durch Einarbeitung von Fasern mit erhöhtem Grip in die Kontaktfläche, bei deren Herstellung ausgestaltet werden. Wie bereits für die Reinigungsschicht beschrieben, kann auch die Kontaktschicht mit deren Kontaktfläche aus gewirktem, gestricktem, gewebtem oder nicht gewebtem Textilmaterial bestehen. Vorzugsweise kommt ein Mikrofaserflächengebilde, beispielsweise aus Polyamid- und/oder Polyester-Mikrofasern zum Einsatz, wobei erfindungsgemäß Fasern aus Vulkanisaten von Natur- oder Synthesekautschuken oder gummierte Fasern, beispielsweise zumindest abschnittsweise gummiummantelte Mikrofasern mit in das Textilmaterial eingewirkt, eingestrickt oder eingewebt werden. Die Texturierung der Kontaktfläche kann aber auch durch Einarbeiten einer Grip-Fläche in die Kontaktfläche ausgebildet sein. So könnte beispielsweise ein Einschnitt, der bis in die Kontaktschicht oder bis zur Trägerschicht führt, als Fläche mit erhöhter Grip-Eigenschaft dienen. Der Einschnitt bewirkt, dass bei dessen Kontaktierung beim Herausschieben des Reinigungstuchs oder -pads, sich die Kontaktfläche des Benutzers, beispielsweise eine Fingerfläche, gegen die den Einschnitt umgrenzende vertikale Fläche der Kontaktschicht drückt, wobei das Reinigungstuch oder -pad durch Druck gegen die vertikale Fläche der Kontaktschicht aus dem Reinigungstuchbehälter geschoben werden kann. Insgesamt hat die Texturierung der Kontaktschicht des erfindungsgemäßen Reinigungstuchs oder -pads in Form einer Grip-Fläche gegenüber herkömmlichen Reinigungstüchern ohne Texturierung den Vorteil, dass die Griffigkeit, somit die Handhabbarkeit, des erfindungsgemäßen Reinigungstuchs oder -pads erhöht wird.

Die Aufgabe der vorliegenden Erfindung wird ebenfalls gelöst durch ein System, umfassend das erfindungsgemäße Reinigungstuch oder -pad und einen Reinigungstuchbehälter mit einem Grundkörper, der zumindest abschnittsweise als Hohlprofil mit einer Längsachse mit mindestens drei aneinander angrenzenden, das Profil bildenden Seitenwänden und mit zumindest einer Stirnwand ausgebildet ist, wobei die Außenkontur des Reinigungstuchs oder -pads der Innenkontur des Grundkörpers derart angepasst ist, dass das Reinigungstuch oder -pad in den Grundkörper einschiebbar oder aus den Grundkörper herausschiebbar ist und zumindest abschnittsweise durch die Seitenwände umschlossen werden kann.

Ein Reinigungstuchbehälter für das erfindungsgemäße System ist beispielsweise als Reinigungstuchbox aus dem Gemeinschaftsgeschmacksmuster 2008409-0001 bekannt.

Die bekannte Reinigungstuchbox ist als transparentes Kunststoff-Case in Form einer rechteckigen Box mit vier Seitenteilen, einer offenen Stirnseite und einem Bodenteil ausgebildet. Das Bodenteil bildet mit zwei der vier Seitenteile eine Schmalseite der Box. In den anderen zwei Seitenteilen ist in Angrenzung an die offene Stirnseite jeweils eine halbkreisförmige Ausnehmung ausgestaltet, die von beiden Seiten in die offene Stirnseite übergehen. Über die offene Stirnseite ist ein Reinigungstuch, das entlang seiner Mittelachse einmal gefaltet ist, in die bekannte Reinigungsbox einsteckbar. Um das in der bekannten Reinigungstuchbox aufgenommene Reinigungstuch aus der Box zu entnehmen, wird das Reinigungstuch unter Kontaktierung mit dem Daumen und dem Zeigefinger über die beidseitig in zwei der Seitenwände ausgebildeten halbkreisförmigen Ausnehmungen, also unter Anwendung eines sognannten Pinzettengriffs, aus der Reinigungstuchbox herausgezogen.

Ergänzend zu der Beschreibung zu dem erfindungsgemäßen Reinigungstuch oder - pad kann das zumindest einmal gefaltete und in die Reinigungsbox oder in den Reinigungstuchbehälter einsteckbare Tuch oder pad wenigstens zwei Texturierungen in Form von Grip-Flächen derart aufweisen, dass beispielsweise eine Grip-Fläche zur Kontaktierung mit dem Zeigefinger ausgebildet ist und in die andere Grip-Fläche zur Kontaktierung mit dem Daumen ausgebildet ist, wodurch eine bessere Haptik, d.h. eine bessere Handhabbarkeit beim Herausziehen mittels des Pinzettengriffes aus dem Reinigungstuchbehälter oder der -box erreicht wird.

Um hier Wiederholungen bezüglich weiterer Vorteile des erfindungsgemäßen Systems zu vermeiden, wird auf die Beschreibung der vorteilhaften Ausgestaltung des erfindungsgemäßen Reinigungstuchs oder -pads verwiesen und es wird vollumfänglich auf diese zurückgegriffen.

Bevorzugte Ausführungsbeispiele:
Weitere, die Erfindung verbessernde Maßnahmen, werden nachstehend mit der Beschreibung von bevorzugten Ausführungsbeispielen der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die in den Figuren dargestellten Ausführungsbeispiele nur beschreibenden Charakter haben und nicht dazu gedacht sind, die Erfindung in irgendeiner Form einzuschränken.

Es zeigen:
- Fig. 1: ein erfindungsgemäßes Reinigungstuch oder -pad in perspektivischer Ansicht,
- Fig. 2: ein erfindungsgemäßes Reinigungstuch oder -pad in Draufsicht auf die Kontaktfläche mit einer als Grip-Punkt ausgestalteten Texturierung,
- Fig. 3: ein erfindungsgemäßes Reinigungstuch oder -pad in Draufsicht auf die Kontaktfläche mit einer als Grip-Linie ausgestalteten Texturierung,
- Fig. 4: ein erfindungsgemäßes Reinigungstuch oder -pad in Draufsicht auf die Kontaktfläche mit einer als sich überschneidende Grip-Linien ausgestalteten Texturierung in Form eines Rautenmusters,
- Fig. 5: ein erfindungsgemäßes Reinigungstuch oder -pad in Draufsicht auf die Kontaktfläche mit zwei aus zueinander beabstandeten als parallel zueinander liegenden Grip-Linien ausgestalteten Texturierungen,
- Fig. 6: ein erfindungsgemäßes Reinigungstuch oder -pad in Draufsicht auf die Kontaktfläche mit einer als sich überschneidende Grip-Linien ausgestalteten Texturierung in Form eines Gittermusters,
- Fig. 7: ein erfindungsgemäßes Reinigungstuch oder -pad in Draufsicht auf die Kontaktfläche mit einer als Zeichen ausgestalteten Texturierung in Form eines Zeichens oder Symbols,
- Fig.8: das Reinigungstuch oder -pad aus Figur 7 in einem erfindungsgemäßen System mit einem Reinigungstuchbehälter, in einer perspektivischen Ansicht,
- Fig.9: die Ausführungsform aus Figur 7 mit einem um 90° gedrehten Zeichen in einem erfindungsgemäßen System, umfassend eine als Reinigungstuchbehälter ausgestaltete Reinigungstuchbox, in einer perspektivischen Ansicht,
- Fig.10: ein erfindungsgemäßes Reinigungstuch oder -pad in einem erfindungsgemäßen System, umfassend die als Reinigungstuchbehälter ausgestaltete Reinigungstuchbox aus Figur 9, in Draufsicht auf die Vorderseite der Reinigungstuchbox,
- Fig.11: ein erfindungsgemäßes System mit der als Reinigungstuchbehälter ausgestalteten Reinigungstuchbox aus Figur 10 und mit einem erfindungsgemäßen Reinigungstuch oder -pad mit vollflächiger Grifffläche im Bereich der Ausnehmung in Draufsicht auf die Vorderseite der Reinigungstuchbox,
- Fig.12: den Reinigungstuchbehälter aus Figur 8 mit einem darin aufgenommenen erfindungsgemäßen Reinigungstuch oder -pad als erfindungsgemäßes System in einer perspektivischen Ansicht,
- Fig.13: ein erfindungsgemäßes Reinigungstuch oder -pad in Schnittansicht mit einer auf die Kontaktfläche aufgebrachten Texturierung in Form von zueinander beabstandeten Grip-Punkten oder Grip-Linien, und
- Fig.14: ein erfindungsgemäßes Reinigungstuch oder -pad in Schnittansicht mit einer in die Kontaktschicht versenkten, eingearbeiteten Texturierung in Form von zueinander beabstandeten Grip-Punkten oder Grip-Linien.

In den unterschiedlichen Figuren sind gleiche Teile stets mit denselben Bezugszeichen versehen, weshalb diese in der Regel nur einmal beschrieben werden.

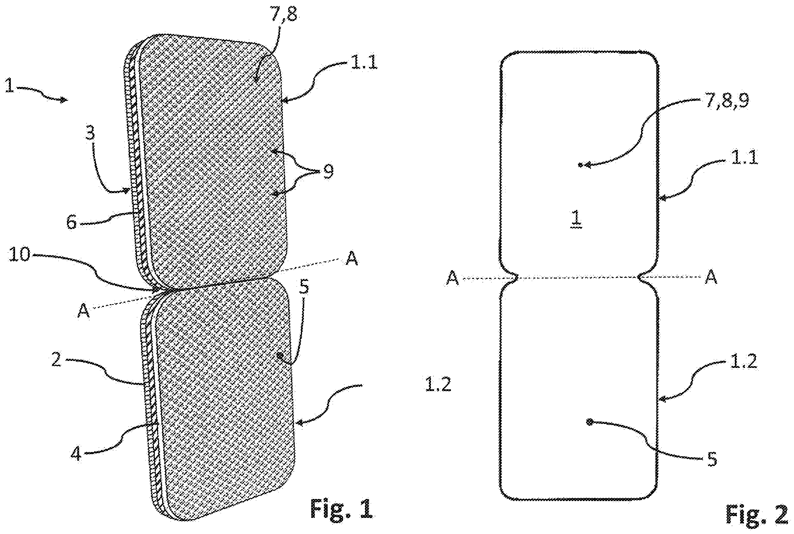

Das in Figur 1 in perspektivischer Seitenansicht dargestellte Reinigungstuch oder - pad 1 weist eine Reinigungsschicht 2 mit einer Reinigungsfläche 3 und eine Kontaktschicht 4 mit einer Kontaktfläche 5 auf. Zwischen der Kontaktschicht 4 und der Reinigungsschicht 5 ist eine Verstärkungsschicht 6 angeordnet. Auf der Kontaktfläche 5 ist dem Benutzer zugewandt eine vollflächige Texturierung 7 in Form einer Grip-Fläche 8 ausgebildet, die die Griffigkeit Reinigungstuchs oder -pads 1 gegenüber bekannten Reinigungstüchern für den Benutzer erhöht, da die einzelnen, in einem vollflächigen Muster die Kontaktfläche bedeckend, ausgebildeten Grip-Punkte 9 gegenüber der Kontaktfläche 5 einen erhöhten Reibungswiderstand aufweisen, der strukturell und materialbedingt zu erklären ist. Das in der Figur 1 dargestellte Reinigungstuch oder - pad 1 ist aus zwei spiegelsymmetrischen Reinigungstüchern oder -pads 1 ausgestaltet, die über eine Falzlinie 10, die die Symmetrieachse AA für die beiden, nämlich das in der Figur 1 obere Reinigungstuch oder -pad 1.1 und das untere Reinigungstuch oder -pad 1.2 bilden, miteinander verbunden sind. Die Falzlinie 10 dient zum Falten des Reinigungstuchs oder -pads 1, um dieses beispielsweise in einem Reinigungstuchbehälter 100 oder einer -box aufzunehmen, wobei beim Falten die Außenkontur des Reinigungstuch oder -pad 1 der Innenkontur des Reinigungstuchbehälters 100 angepasst wird. Die Falzlinie 10 dient aber auch dazu, um das obere Reinigungstuch oder -pad 1.1 und das untere Reinigungstuch oder -pad 1.2 mit deren Reinigungsschichten 3 um einen zu säubernden Gegenstand, beispielsweise ein Brillenglas zu legen, so dass mit einem Arbeitsschritt sowohl die Innenseite als auch die Außenseite des Brillenglases mit dem erfindungsgemäßen Reinigungstuch oder -pad 1 durch Auflage der Reinigungsschicht 2 mit deren Reinigungsfläche 3 auf die Innenseite und durch Auflage der Reinigungsschicht 2 mit deren Reinigungsfläche 3 auf die Außenseite gesäubert werden kann. Beim Säubern des Gegenstands bietet die Texturierung 7 in Form der Grip-Fläche 8 dem Benutzer dabei eine erhöhte Griffigkeit.

Figur 2 zeigt ein Reinigungstuch oder -pad 1 in Draufsicht auf die Kontaktfläche 5 der Kontaktschicht 4. Die Texturierung 7 der Kontaktfläche 5 umfasst im Gegensatz zu der vollflächigen Texturierung 7 der Kontaktfläche 5 des Reinigungstuchs oder -pads 1 aus Figur 1 lediglich eine als einen Grip-Punkt 9 ausgebildete Grip-Fläche 8 im oberen Teil 1.1 des Reinigungstuchs oder -pads 1. Im Gegensatz zu dem zweiteiligen Reinigungstuch oder -pad 1 wie in Figur 1 dargestellt, ist das Reinigungstuch oder - pad 1 in Figur 2 als ein monolithisch, d.h. als einteiliges Reinigungstuch oder -pad 1 ausgestaltet, welches entlang der Symmetrieachse A-A gefaltet werden kann, wobei beim Falten die Reinigungsfläche 3 des oberen Teils 1.1 des Reinigungstuchs oder - pads 1 relativ zu der Reinigungsfläche 3 des unteren Teils 1.2 des Reinigungstuchs oder -pads 1 geführt wird.

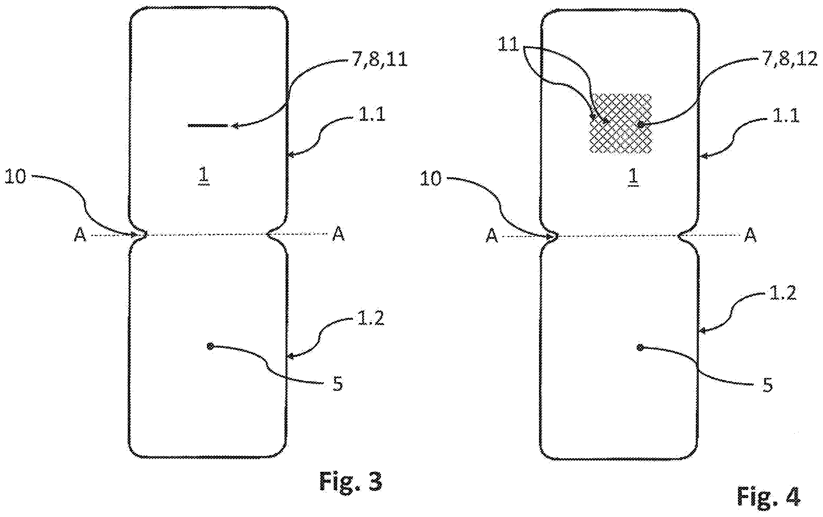

Die Figuren 3 bis 8 zeigen Ausführungsformen von erfindungsgemäßen Reinigungstüchern oder -pads 1 in Draufsicht auf die Kontaktfläche 5 der Kontaktschicht 4.

In Figur 3 umfasst die Texturierung 7 der Kontaktfläche 5 eine Grip-Fläche 8 in Form einer Grip-Linie 11. Die Grip-Linie 11 kann auf die Kontaktfläche 5 aufgetragen, in die Kontaktfläche 5 eingearbeitet oder gegenüber der Kontaktfläche 5 versenkt ausgebildet sein.

In Figur 4 umfasst die Texturierung 7 der Kontaktfläche 5 eine Grip-Fläche 8 in Form von sich kreuzenden Grip-Linien 11, wodurch ein Flächengebilde 12 in Form einer quadratischen Grip-Fläche 8 mit einer rautenförmigen Texturierung 7 gebildet ist. Die Grip-Linien 11 des Flächengebildes können auf die Kontaktfläche 5 aufgetragen, in die Kontaktfläche 5 eingearbeitet oder gegenüber der Kontaktfläche 5 versenkt, bzw. in Kombination aus zumindest zwei der zuvor genannten Ausgestaltungen, ausgebildet sein.

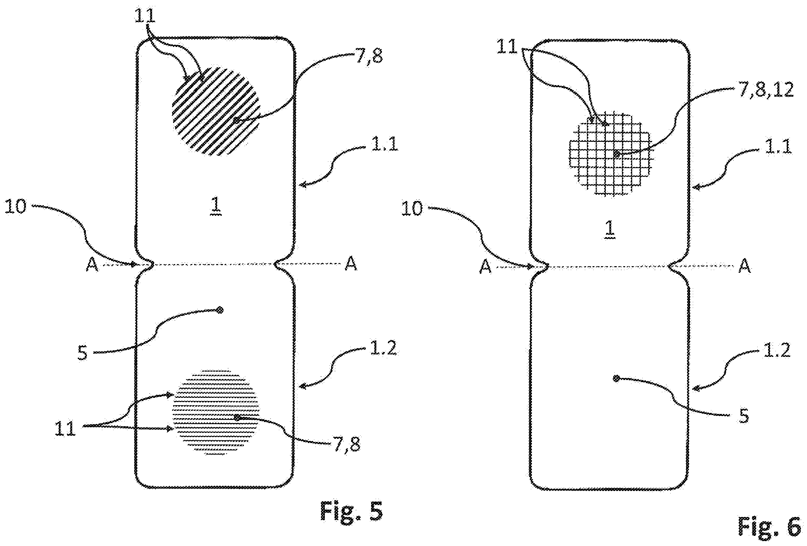

In Figur 5 umfasst die Texturierung 7 der Kontaktfläche 5 eine Grip-Fläche 8 in Form von parallel zueinander angeordneten Grip-Linien 11, wobei ein Flächengebilde 12 in Form einer kreisförmigen Grip-Fläche 8 gebildet ist. Die Grip-Linien 11 des Flächengebildes können auf die Kontaktfläche 5 aufgetragen, in die Kontaktfläche 5 eingearbeitet oder gegenüber der Kontaktfläche 5 versenkt, bzw. in Kombination aus zumindest zwei der zuvor genannten Ausgestaltungen, ausgebildet sein.

Vorteilhaft kann das Flächengebilde, wie insgesamt in den Figuren dargestellt, den Anforderungen an die Bewegungsrichtung des Reinigungstuchs oder -pads 1 beim Säubern eines Gegenstandes um dessen Mittelpunkt herum in unterschiedlichen Winkeln gedreht auf- oder in die Kontaktfläche 5 eingetragen werden, um die Griffigkeit beim Säubern mit dem Reinigungstuch oder -pad 1 optimal einzustellen. Vorliegend ist die als Grip-Fläche 8 ausgebildete Texturierung 7 in Form von parallel zueinander angeordneten Grip-Linien 11 des unteren Teils 1.2 des Reinigungstuchs oder -pads 1 gegenüber der als Grip-Fläche 8 ausgebildeten Texturierung 7 in Form von parallel zueinander angeordneten Grip-Linien 11 des oberen Teils 1.1 des Reinigungstuchs oder -pads 1 um ca. 45° gedreht auf- oder in die Kontaktfläche 5 eingetragen. Es sind zur optimalen Nutzung des Reinigungstuchs oder -pads 1 auch sämtliche Kombinationen aus den dargestellten Texturierungen 7 denkbar. Auch deren Position und Größe sind an die Anforderungen, die an das Reinigungstuch oder -pad 1 gestellt werden, anpassbar, d.h. variabel auf- oder in die Kontaktfläche 5 eintragbar bzw. in diese einarbeitbar. Vorteilhaft ist dabei die Größe und die Position der Grip-Fläche 8 und gegebenenfalls die Form der Texturierung 7 derart ausgewählt, dass eine auf der Kontaktfläche abgebildete Werbebotschaft, ein Bild, ein Muster oder ein Slogan durch die Grip-Fläche 8 nicht verdeckt werden, bzw. die Werbebotschaft, falls diese im Bereich der Texturierung 7 liegt, durch die Texturierung 7 hindurch sichtbar ist. Dies kann beispielsweise durch einen ausreichenden Abstand beispielsweise der Grip-Linien 11 oder der Grip-Punkte 9 zueinander erreicht werden, oder das Material, beispielsweise der Grip-Linien 11 oder der Grip-Punkte 9, kann transparent sein, so dass beispielsweise die unter der Texturierung 7 liegende Werbebotschaft, das Bild, das Muster oder der Slogan durch die Grip-Linien 11 oder die Grip-Punkte 9 hindurch sichtbar ist.

In Figur 6 umfasst die Texturierung 7 der Kontaktfläche 5 eine Grip-Fläche 8 in Form von sich kreuzenden Grip-Linien 11, wodurch ein Flächengebilde 12 in Form einer kreisrunden Grip-Fläche 8 mit einer kästchenförmigen Texturierung 7 gebildet ist. Die Grip-Linien 11 der kästchenförmig ausgebildeten Texturierung 7 können auf die Kontaktfläche 5 aufgetragen, in die Kontaktfläche 5 eingearbeitet oder gegenüber der Kontaktfläche 5 versenkt, bzw. in Kombination aus zumindest zwei der zuvor genannten Ausgestaltungen, ausgebildet sein.

Eine kreisrunde Grip-Fläche 8 oder auch eine ovale Grip-Fläche (hier nicht dargestellt), bietet eine besonders gute Griffigkeit, die an die Anatomie eines Daumens oder insgesamt an die Finger eines Benutzers angepasst ist, wodurch eine bessere Handhabbarkeit beispielsweise beim Herausziehen mittels des Pinzettengriffes aus einem Reinigungstuchbehälter oder einer -box erreicht werden kann.

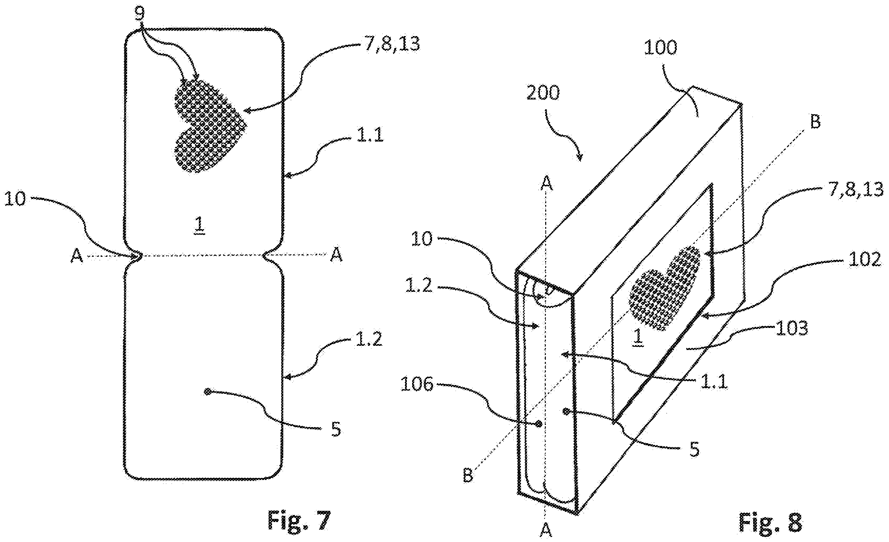

In Figur 7 umfasst die Texturierung 7 der Kontaktfläche 5 eine Grip-Fläche 8 in Form eines Zeichens 13 oder Symbols, vorliegend in Form eines Herzes, das aus einer Vielzahl von Grip-Punkten 9 gebildet ist. Das Zeichen kann auf die Kontaktfläche 5 aufgetragen, in die Kontaktfläche 5 eingearbeitet, beispielsweise durch Verwendung von Fasern mit erhöhter Griffigkeit, oder gegenüber der Kontaktfläche 5 versenkt, bzw. in Kombination aus zumindest zwei der zuvor genannten Ausgestaltungen, ausgebildet sein. Das Zeichen 13 in Form eines Herzes ist aus einer Vielzahl von Grip-Punkten 9 gebildet.

Die Position und Ausrichtung des Zeichens 13 auf der Kontaktfläche 5 ist dabei vorteilhaft so gewählt, dass das Zeichen 13 bei Aufnahme in einem Reinigungstuchbehälter 100 durch eine in einer Seitenwand des Reinigungstuchbehälters 100 ausgestalteten Aussparung 102 hindurch sichtbar ist (siehe Figur 8). Somit verleiht die Positionierung und Ausrichtung des Zeichens 13 auf der Kontaktfläche 5 im Bereich der Aussparung 102 neben deren technischen Funktionen, nämlich als Durchgriff durch die Wände zur Kontaktierung des in dem Grundkörper 103 aufgenommenen Reinigungstuches oder -pads 1 und den Verschiebeweg des Reinigungstuches oder -pads 1 parallel und/oder orthogonal zur Längsachse BB bildend, auch die Funktion als Werbefenster oder -fläche für die auf das Reinigungstuch oder -pad 1 aufgebrachte Werbebotschaft. Beim Verschieben des Reinigungstuchs oder -pads 1 bei Kontaktierung der Grip-Fläche 8 durch die Aussparung 102 hindurch, bietet die erhöhte Griffigkeit der Texturierung 7 der Kontaktfläche 5 in Form der Grip-Fläche 8 einen verbesserten Halt und somit eine verbesserte Handhabbarkeit des erfindungsgemäßen Reinigungstuchs oder -pads 1 bei dessen Herausschieben aus dem Reinigungstuchbehälter 100 oder einer Reinigungstuchbox.

Die Figur 8 zeigt ein erfindungsgemäßes System 200 mit einen Reinigungstuchbehälter 100, und hier beispielsweise dem in Figur 7 dargestellten Reinigungstuch oder - pad 1. Der Reinigungstuchbehälter 1 ist zur Aufnahme des Reinigungstuches oder - pads 1 ausgebildet und weist einen Grundkörper 103 auf, der als Hohlprofil ausgestaltet ist. Das Hohlprofil ist aus vier aneinander angrenzenden Seitenwänden gebildet und weist eine Längsachse BB auf. Die in der perspektivischen Ansicht vorne liegende Fläche des Hohlprofils ist als Stirnwand 106 ausgebildet, die vollflächig als Öffnung ausgestaltet ist, über die das Reinigungstuch oder -pad 1 in den Grundkörper 103 eingeschoben oder aus diesem herausgeschoben werden kann. Die in der perspektivischen Ansicht hinten liegende Fläche des Hohlprofils ist als Stirnwand ausgebildet, die eine Anschlagfläche beim Einschieben des Reinigungstuchs oder -pads 1 in den Grundkörper 103 für das Reinigungstuch oder -pad 1 bildet, d. h. einen Boden des Grundkörpers 103 bildet. Das in dem Grundkörper 103 aufgenommene Reinigungstuch oder -pad 1 wird, wie in der Figur dargestellt, durch die Seitenwände und die als Boden des Grundkörpers 103 ausgestaltete hintere Stirnwand umschlossen. Durch die in der Figur dargestellte Aussparung 102 kann das in dem Grundkörper 103 aufgenommene Reinigungstuch oder -pad 1 durch Durchgriff durch die Aussparung 102 kontaktiert, d. h. berührt werden, und kann unter Aufrechterhaltung des Kontaktes oder der Berührung entlang der Aussparung 102 parallel zu der Längsachse BB über die als Öffnung ausgebildete Stirnwand 106 aus dem Grundkörper 103 heraus geschoben werden. Dabei ist vorteilhaft, dass die Position des Zeichens 13 auf oder in der Kontaktfläche 5 des Reinigungstuchs oder -pads 1 so gewählt ist, dass das Zeichen 13 beim Zusammenfalten des Reinigungstuchs oder -pads 1 deckungsgleich zu der Aussparung 102 bei Aufnahme des Reinigungstuchs oder -pads 1 in dem Reinigungstuchbehälter 100 liegt. Vorliegend in der Figur 8 ist das Reinigungstuch oder - pad 1 derart in dem Reinigungstuchbehälter 100 aufgenommen, dass die Falzlinie 10, die parallel und deckungsgleich zu der Symmetrieachse AA liegt, im Bereich der vollflächig als Öffnung ausgebildeten Stirnwand 106 des Grundkörpers 103 orientiert ist.

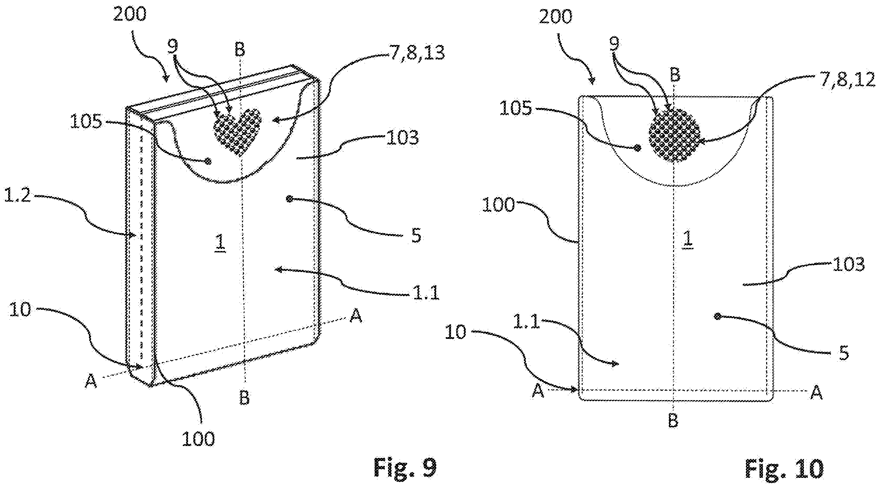

Eine dazu gegensätzliche Orientierung des in dem Reinigungstuchbehälter 100 aufgenommenen Reinigungstuchs oder -pads 1 ist in dem System 200 in Figur 9 dargestellt. In Figur 9 ist das Reinigungstuch oder -pad 1 derart in einem als Reinigungstuchbox bezeichneten Reinigungstuchbehälter 100 aufgenommen, dass die Falzlinie 10, die parallel und deckungsgleich zu der Symmetrieachse AA liegt, im Bereich der den Boden bildenden Stirnwand des Grundkörpers 103 orientiert ist. Zudem orientiert sich die Position und Ausrichtung des Zeichens an der im oberen Bereich der Reinigungstuchbox ausgestalteten Ausnehmung 105, nämlich derart, dass das Reinigungstuch oder -pad 1 mittels des Pinzettengriffes bei Kontaktierung der als Zeichen 13 ausgestalteten Texturierung 7 aus der Reinigungstuchbox gezogen werden kann.

Figur 10 zeigt den als Reinigungstuchbox ausgestalteten Reinigungstuchbehälter 100 aus Figur 9 in einem System 200 mit einem erfindungsgemäßen Reinigungstuch oder -pad 1, bei dem die Texturierung 7 in Form einer kreisrunden Grip-Fläche 8 als Flächengebilde 12, das aus einer Vielzahl von einzelnen Grip-Punkten 9 gebildet ist, im Bereich der Ausnehmung 105 des als Reinigungstuchbox ausgestalteten Reinigungstuchbehälters 100 liegt.

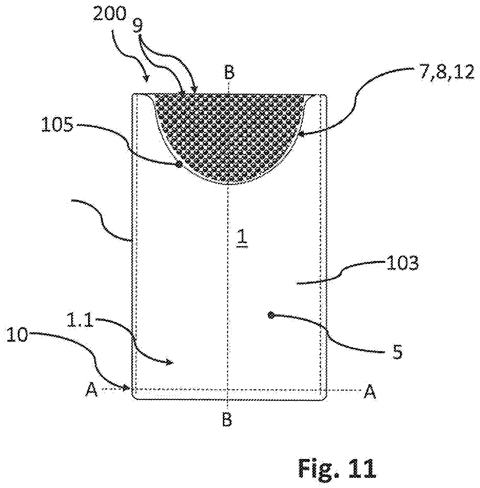

Figur 11 zeigt den als Reinigungstuchbox ausgestalteten Reinigungstuchbehälter 100 aus Figur 9 und Figur 10 in einem System 200 mit einem erfindungsgemäßen Reinigungstuch oder -pad 1, bei dem die Texturierung 7 als Flächengebilde 12 in Form einer Grip-Fläche 8 ausgebildet ist, die vollflächig und deckungsgleich zu der Ausnehmung 105 des als Reinigungstuchbox ausgestalteten Reinigungstuchbehälters 100 liegt. Die Texturierung 7 ist bei dieser beispielhaften Ausführung aus einer Vielzahl von einzelnen Grip-Punkten 9 gebildet.

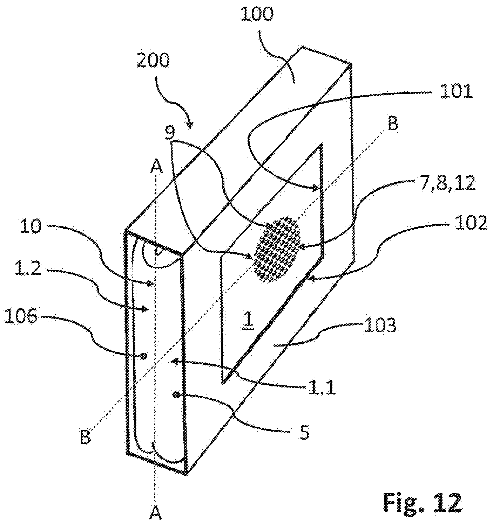

Figur 12 zeigt ein erfindungsgemäßes System 200 mit einen Reinigungstuchbehälter 100 in perspektivischer Ansicht, wobei die Texturierung 7 in Form einer kreisrunden Grip-Fläche 8 als Flächengebilde 12, das aus einer Vielzahl von Grip-Punkten gebildet ist, deckungsgleich zu der in dem Reinigungstuchbehälter ausgestalteten Aussparung 102 liegt.

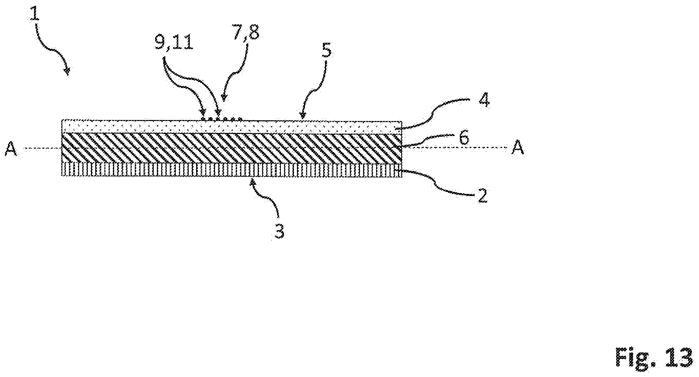

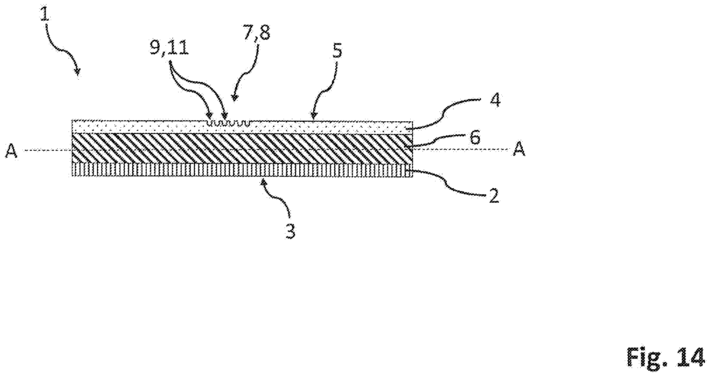

Die Figuren 13 und 14 zeigen Ausführungsformen eines erfindungsgemäßen Reinigungstuchs oder -pads 1 in Schnittansicht senkrecht zu der Symmetrieachse AA, mit einer in Figur 13 dargestellten auf die Kontaktfläche 5 aufgebrachten Texturierung 7 in Form von zueinander beabstandeten Grip-Punkten 8 oder Grip-Linien 11 und mit einer in Figur 14 dargestellten, gegenüber der Kontaktfläche 5 eingearbeiteten, versenkten Texturierung in Form von zueinander beabstandeten Grip-Punkten 8 oder Grip-Linien 11, die beispielsweise durch Laserung, Prägung oder Einschneiden in die Kontaktfläche 5 bzw. in die Kontaktschicht 4 eingearbeitet werden können. Sowohl durch die Auftragung von Grip-Punkten 8 oder -Linien 11 oder durch deren Einarbeitung in die Kontaktschicht 4 und/oder Kontaktfläche 5 entstehen Hügel und Täler mit vertikalen, zu der Kontaktfläche 5 der Kontaktschicht 4 vertikal liegenden Kontaktflächen. Die vertikal zu der Kontaktfläche 5 liegenden Kontaktflächen bewirken, dass bei dessen Kontaktierung beispielsweise beim Herausschieben des Reinigungstuchs oder -pads 1 aus dem Reinigungstuchbehälter 100, sich eine Kontaktfläche des Benutzers, beispielsweise eine Fingerfläche, sich gegen die vertikalen Kontaktflächen drückt, wobei das Reinigungstuch oder -pad 1 durch Druck gegen die vertikalen Kontaktflächen beispielsweise aus dem Reinigungstuchbehälter 100 geschoben werden kann.

## Patentansprüche

1. Reinigungstuch oder -pad (1) mit
- wenigstens einer Reinigungsschicht (2) mit wenigstens einer Reinigungsfläche (3),
- wenigstens einer Kontaktschicht (4) mit wenigstens einer Kontaktfläche (5) und
- wenigstens einer Verstärkungsschicht (6) in Form einer Trägerschicht, die zumindest abschnittsweise zwischen der Reinigungsschicht (2) und der Kontaktschicht (4) angeordnet ist,
**dadurch gekennzeichnet, dass**
nur auf der Kontaktfläche (5) der Kontaktschicht (4) zumindest abschnittsweise wenigstens eine Texturierung (7) in Form einer Grip-Fläche (8) ausgebildet ist, wobei die GripFläche (8) gegenüber der Kontaktfläche (5) einen erhöhten Reibungswiderstand aufweist.

2. Reinigungstuch oder -pad (1) nach Anspruch 1, **dadurch gekennzeichnet, dass** die Texturierung (7) in Form der Grip-Fläche (8) in Form eines einzelnen Grip-Punktes (9) oder einer einzelnen Grip-Linie (11) ausgebildet ist.

3. Reinigungstuch oder -pad (1) nach Anspruch 1 oder 2, **dadurch gekennzeichnet, dass** die Texturierung (7) in Form der Grip-Fläche (8) in Form eines Musters, eines Zeichens (13), eines Symbols, eines Bildes und/oder einer Figur ausgestaltet ist.

4. Reinigungstuch oder -pad (1) nach einem der vorhergehenden Ansprüche, **dadurch gekennzeichnet, dass** die Texturierung (7) in Form der Grip-Fläche (8) gegenüber der Kontaktfläche (5) erhaben ausgestaltet ist.

5. Reinigungstuch oder -pad (1) nach Anspruch 4, **dadurch gekennzeichnet**, dassdass die Texturierung (7) in Form der Grip-Fläche (8) aus einem Material ausgebildet ist, das auf die Kontaktfläche (5) aufgetragen wird.

6. Reinigungstuch oder -pad (1) nach einem der vorhergehenden Ansprüche,**dadurch gekennzeichnet, dass** die Texturierung (7) in Form der Grip-Fläche (8) in die Kontaktfläche (5) eingearbeitet ist.

7. Reinigungstuch oder -pad (1) nach Anspruch 5, **dadurch gekennzeichnet, dass** die Texturierung (7) in Form der Grip-Fläche (8) gegenüber der Kontaktfläche (5) versenkt ausgestaltet ist.

8. Reinigungstuch oder -pad (1) nach einem der vorhergehenden Ansprüche, **dadurch gekennzeichnet, dass** die Verstärkungsschicht (6) monolithisch mit der Reinigungsschicht (2) ausgebildet ist, wobei die der Kontaktfläche gegenüberliegende Fläche der Verstärkungsschicht (6) als Reinigungsfläche (3) ausgebildet ist.

9. System (200) umfassend das Reinigungstuch oder -pad (1) nach einem der Ansprüche 1 bis 8 und einen Reinigungstuchbehälter (100) mit einem Grundkörper (103), der zumindest abschnittsweise als Hohlprofil mit einer Längsachse (BB) mit mindestens drei aneinander angrenzenden, das Profil bildenden Seitenwänden und mit zumindest einer Stirnwand ausgebildet ist, wobei die Außenkontur des Reinigungstuchs oder -pads (1) der Innenkontur des Grundkörpers (103) derart angepasst ist, dass das Reinigungstuch oder -pad (1) in den Grundkörper (103) einschiebbar oder aus den Grundkörper (103) herausschiebbar ist und zumindest abschnittsweise durch die Seitenwände umschlossen werden kann.

10. System nach Anspruch 9, **dadurch gekennzeichnet, dass** die Außenkontur des Reinigungstuch oder -pads (1) durch Falten des Reinigungstuchs oder -pads (1) der Innenkontur des Grundkörpers (103) des Reinigungstuchbehälters (100) angepasst werden kann.

11. System nach Anspruch 9 oder 10, **dadurch gekennzeichnet, dass** das Reinigungstuch oder-pad (1) eine Texturierung (7) in Form einer Grip-Fläche (8) aufweist, die derart auf dem Reinigungstuch oder-pad (1) positioniert ist, dass diese bei Aufnahme des Reinigungstuchs oder-pads (1) in dem Grundkörper (103) zumindest abschnittsweise deckungsgleich zu in zumindest einer der Seitenwände ausgebildeten Aussparung (102) liegt.

12. System nach einem der Ansprüche 9 bis 11, **dadurch gekennzeichnet, dass** bei Aufnahme des Tuchs oder Pads (1) in dem Reinigungstuchbehälter (100) die Kontaktfläche (5) der Kontaktschicht (4) zumindest abschnittsweise wenigstens eine Wandinnenfläche (101) des Reinigungstuchbehälters (101) kontaktiert.

13. System nach Anspruch 12, **dadurch gekennzeichnet, dass** die Texturierung (7) in Form der Grip-Fläche (8) zumindest abschnittsweise in einem Abschnitt der Kontaktfläche (5) ausgebildet ist, welcher bei Aufnahme des Tuchs oder Pads (1) in dem Reinigungstuchbehälter (100) deckungsgleich zu einer in dem Reinigungstuchbehälter (100) ausgebildeten Aussparung (102) liegt.

14. System nach Anspruch 13, **dadurch gekennzeichnet, dass** durch die Texturierung (7) in Form der Grip-Fläche (8) bei Durchgriff durch die Aussparung (102) und Kontaktieren der Grip-Fläche (8) ein Herausführen des Tuchs oder Pads (1) aus dem Reinigungstuchbehälter (100) unterstützt wird.

15. System_nach einem der vorhergehenden Ansprüche 9 bis 14, **dadurch gekennzeichnet, dass** die Texturierung (7) in Form der Grip-Fläche (8) in einem Abschnitt der Kontaktfläche (5) ausgebildet, welcher die Wandinnenfläche (101) des Reinigungstuchbehälters (100) kontaktiert.

## Claims

1. Cleaning cloth or pad (1) comprising
- at least one cleaning layer (2) having at least one cleaning area (3),
- at least one contact layer (4) having at least one contact area (5) and
- at least one reinforcing layer (6) in the form of a carrier layer which is arranged between the cleaning layer (2) and the contact layer (4), at least in sections,
**characterized in that**
at least one texturing (7) in the form of a grip area (8) is formed on the contact area only, at least in sections, wherein the grip area (8) has a frictional resistance that is greater than that of the contact area (5).

2. The cleaning cloth or pad (1) according to claim 1, **characterized in that** the texturing (7) in the form of the grip area (8) is designed in the form of an individual grip point (9) or an individual grip line (11).

3. The cleaning cloth or pad (1) according to claim 1 or 2, **characterized in that** the texturing (7) in the form of the grip area (8) is structured in the form of a pattern, a sign (13), a symbol, an image and/or a figure.

4. The cleaning cloth or pad (1) according to one of the preceding claims, **characterized in that** the texturing (7) in the form of the grip area (8) is structured raised relative to the contact area (5).

5. The cleaning cloth or pad (1) according to claim 4, **characterized in that** the texturing (7) in the form of the grip area (8) is made of a material that is applied to the contact area (5).

6. The cleaning cloth or pad (1) according to one of the preceding claims, **characterized in that** the texturing (7) in the form of the grip area (8) is incorporated into the contact area (5).

7. The cleaning cloth or pad (1) according to claim 5, **characterized in that** the texturing (7) in the form of the grip area (8) is structured sunk in relative to the contact area (5).

8. The cleaning cloth or pad (1) according to one of the preceding claims, **characterized in that** the reinforcing layer (6) is designed to be monolithic together with the cleaning layer (2), wherein the area of the reinforcing layer (6) opposite the contact area is designed as a cleaning area (3).

9. System (200) comprising the cleaning cloth or pad (1) according to one of claims 1 to 8 and a cleaning cloth container (100) having a base boy (103) that is designed, at least in sections, as a hollow profile that has a longitudinal axis (BB) and at least three side walls that are adjacent to one another and form the profile, and that has at least one rear wall, wherein the exterior contour of the cleaning cloth or pad (1) is adapted to the interior contour of the base body (103) such that the cleaning cloth or pad (1) can be pushed into the base body (103) or pushed out of the base body (103) and can be enclosed by the side walls, at least in sections.

10. System according to claim 9, **characterized in that** the exterior contour of the cleaning cloth or pad (1) can be adapted to the interior contour of the base body (103) of the cleaning cloth container (100) by folding the cleaning cloth or pad (1).

11. System according to claim 9 or 10, **characterized in that** the cleaning cloth or pad (1) comprises a texturing in the form of a grip area (8), the texturing being positioned on the cleaning cloth or pad (1) such that when the cleaning cloth or pad (1) is received in the base body (103) the texturing lies congruent to recess (102) that is formed in at least one of the side walls.

12. System according to one of claims 9 to 11, **characterized in that** when the cloth or pad (1) is received in the cleaning cloth container (100) the contact area (5) of the contact layer (4) contacts at least one wall inside surface (101) of the cleaning cloth container (III), at least in sections.

13. System according to claim 12, **characterized in that** the texturing (7) in the form of the grip area (8) is formed, at least in sections, in a section of the contact area (5) that lies congruent to a recess (102) that is formed in the cleaning cloth container (100) when the cloth or pad (1) is received in the cleaning cloth container (100).

14. System according to claim 13, **characterized in that** the texturing (7) in the form of the grip area (8) supports a removal of the cloth or pad (1) from the cleaning cloth container (100) by reaching through the recess (102) and contacting the grip area (8).

15. System according to one of the preceding claims 9 to 14, **characterized in that** the texturing (7) in the form of the grip area (8) is formed in a section of the contact area (5) which contacts the wall inside surface (101) of the cleaning cloth container (100).

## Revendications

1. Chiffon ou tampon de nettoyage (1) pourvu
- d'au moins une couche nettoyante (2) avec au moins une surface de nettoyage (3),
- d'au moins une couche de contact (4) avec au moins une surface de contact (5) et
- d'au moins une couche de renforcement (6) sous la forme d'une couche support qui est disposée au moins par endroits entre la couche nettoyante (2) et la couche de contact (4),
**caractérisé en ce**
**qu'**au moins une texturation (7) sous la forme d'une surface de préhension (8) est formée uniquement sur la surface de contact (5) de la couche de contact (4) au moins par endroits, où la surface de préhension (8) présente une résistance au frottement plus élevée par rapport à la surface de contact (5).

2. Chiffon ou tampon de nettoyage (1) selon la revendication 1, **caractérisé en ce que** la texturation (7) est conçue sous la forme d'une surface de préhension (8) sous la forme d'un point de préhension (9) individuel ou d'une ligne de préhension (11) individuelle.

3. Chiffon ou tampon de nettoyage (1) selon la revendication 1 ou la revendication 2, **caractérisé en ce que** la texturation (7) sous la forme de la surface de préhension (8) est conçue sous la forme d'un motif, d'une marque, d'un signe (13), d'un symbole, d'une image et/ou d'une figure.

4. Chiffon ou tampon de nettoyage (1) selon l'une des revendications précédentes, **caractérisé en ce que** la texturation (7) sous forme de la surface de préhension (8) est conçue en relief par rapport à la surface de contact (5).

5. Chiffon ou tampon de nettoyage (1) selon la revendication 4, **caractérisé en ce que** la texturation (7) sous la forme de la surface de préhension (8) est conçue dans un matériau qui est appliqué sur la surface de contact (5).

6. Chiffon ou tampon de nettoyage (1) selon l'une des revendications précédentes, **caractérisé en ce que** la texturation (7) sous la forme de la surface de préhension (8) est intégrée dans la surface de contact (5).

7. Chiffon ou tampon de nettoyage (1) selon la revendication 5, **caractérisé en ce que** la texturation (7) sous la forme de la surface de préhension (8) est conçue enterrée par rapport à la surface de contact (5).

8. Chiffon ou tampon de nettoyage (1) selon l'une des revendications précédentes, **caractérisé en ce que** la couche de renforcement (6) est conçue monolithique avec la couche nettoyante (2), où la surface de la couche de renforcement (6) située face à la surface de contact est conçue sous forme de surface de nettoyage (3).

9. Système (200) comprenant le chiffon ou tampon de nettoyage (1) selon l'une des revendications 1 à 8 et un récipient de chiffon de nettoyage (100) pourvu d'un corps de base (103) qui est conçu au moins par endroits comme un profilé creux avec un axe longitudinal (BB) doté d'au moins trois parois latérales adjacentes les unes aux autres formant le profilé et d'au moins une paroi frontale, où le contour extérieur du chiffon ou du tampon de nettoyage (1) est adapté au contour intérieur du corps de base (103) de telle manière que le chiffon ou le tampon de nettoyage (1) puisse être inséré dans le corps de base (103) ou être sorti par coulissement du corps de base (103) et puisse être entouré au moins par endroits par les parois latérales.

10. Système selon la revendication 9, **caractérisé en ce que** le contour extérieur du chiffon ou tampon de nettoyage (1) peut être adapté au contour intérieur du corps de base (103) du récipient de chiffon de nettoyage (100) par le pliage du chiffon ou tampon de nettoyage (1).

11. Système selon la revendication 9 ou la revendication 10, **caractérisé en ce que** le chiffon ou tampon de nettoyage (1) présente une texturation (7) sous la forme d'une surface de préhension (8) qui est positionnée sur le chiffon ou tampon de nettoyage (1) de telle manière que celle-ci est superposable, lors de la réception du chiffon ou tampon de nettoyage (1) sur le corps de base (103), au moins par endroits à une découpe (102) formée dans au moins une des parois latérales.

12. Système selon l'une des revendications 9 à 11, **caractérisé en ce que**, lors de la réception du chiffon ou du tampon (1) dans le récipient de chiffon de nettoyage (100), la surface de contact (5) de la couche de contact (4) est en contact au moins par endroits avec au moins une surface intérieure de paroi (101) du récipient de chiffon de nettoyage (101).

13. Système selon la revendication 12, **caractérisé en ce que** la texturation (7) sous la forme de la surface de préhension (8) est conçue au moins par endroits dans un segment de la surface de contact (5), lequel se situe lors de la réception du chiffon ou du tampon (1) dans le récipient de chiffon de nettoyage (100) de manière superposable à une découpe (102) formée dans le récipient de chiffon de nettoyage (100).

14. Système selon la revendication 13, **caractérisé en ce que**, par la texturation (7) sous la forme de la surface de préhension (8) lors du passage à travers la découpe (102) et la mise en contact avec la surface de préhension (8), on favorise un retrait du chiffon ou du tampon (1) du récipient de chiffon de nettoyage (100).

15. Système selon l'une des revendications 9 à 14, **caractérisé en ce que** la texturation (7) sous la forme de la surface de préhension (8) est conçue dans un segment de la surface de contact (5), lequel est en contact avec la surface intérieure de paroi (101) du récipient de chiffon de nettoyage (100).
